Europäisches Patentamt

European Patent Office

Office européen des brevets

(19)

(11) EP 1 127 846 A1

(12) **EUROPÄISCHE PATENTANMELDUNG**

(43) Veröffentlichungstag:
  29.08.2001  Patentblatt 2001/35

(51) Int Cl.⁷: **C02F 1/50**, C02F 1/72,
  C02F 1/70

(21) Anmeldenummer: 00104101.1

(22) Anmeldetag: 28.02.2000

(84) Benannte Vertragsstaaten:
  **AT BE CH CY DE DK ES FI FR GB GR IE IT LI LU
  MC NL PT SE**
  Benannte Erstreckungsstaaten:
  **AL LT LV MK RO SI**

(71) Anmelder: **SIEMENS AKTIENGESELLSCHAFT
  80333 München (DE)**

(72) Erfinder:
  • **Barnikel, Jochen, Dr.-Ing.
    45470 Mülheim/Ruhr (DE)**
  • **Reitzner, Karl Uve, Dipl.-Ing. (FH)
    91058 Erlangen (DE)**
  • **Schmitz, Friedhelm
    46537 Dinslaken (DE)**

(54) **Verfahren zur Verringerung biologischer Verunreinigungen in einem wasserführenden System**

(57)    Die Erfindung betrifft ein Verfahren zur Verringerung biologischer Verunreinigungen in einem wasserführenden System (3) mit einem korrosionskritischen Anlagenteil (19). Zur Verringerung der biologischen Verunreinigung wird dem wasserführenden System (3) ein Biozid (11) zugesetzt. Im Bereich des korrosionskritischen Anlagenteils (19) wird diese Biozidkonzentration lokal gesenkt. Hierdurch ergibt sich eine geringere korrodierende Wirkung für das korrosionskritische Anlagenteil (19). Vorzugsweise wird das Biozid (11) durch Zugabe von Wasserstoffperoxid abgebaut.

Fig. 1

EP 1 127 846 A1

**Beschreibung**

Die Erfindung betrifft ein Verfahren zur Verringerung biologischer Verunreinigungen in einem verschiedene Anlagenteile aufweisenden, wasserführenden System, bei dem ein die biologischen Verunreinigungen verminderndes Biozid in das Wasser zugegeben wird. Die Erfindung betrifft auch ein entsprechendes wasserführendes System.

Zur Kontrolle und Verringerung von mikrobiologischen Verunreinigungen und zur Verhinderung von biologischem Bewuchs werden wasserführende Systeme häufig mit Bioziden behandelt. Solche wasserführenden Systeme sind z.B. Kühlwassersysteme, die z.B. mit Fluß-, Brack- oder Meerwasser betrieben werden, oder auch Trinkwassersysteme.

Während in Trinkwässern die Behandlung mit Bioziden im Allgemeinen die Bildung von gesundheitsschädlichen bzw. geruchsbeeinflussenden Bestandteilen (Kolliforme, Viren) verhindern soll, liegt der Schwerpunkt der Behandlung von Kühlwässern zusätzlich in der Vermeidung von Ablagerungen, die in den Wärmetauschern des Kühlwassersystems den Wärmeübergang verschlechtern. Die Ablagerungen können aus schleimbildenden Bakterien, aus Algen, aus Muscheln oder aus anderen organischen Bestandteilen bestehen.

In beiden Fällen werden zur Bekämpfung der Wasserverunreinigung und des biologischen Bewuchses bisher vor allem Chlor (Cl$_2$) Natriumhypobromid (NaOBr) und Natriumhypochlorid (NaOCl) verwandt. Die biozide Wirkung wird in erster Linie durch die mit Wasser entstehende undissoziierte hypochlorige Säure (HOCl) nach

$$Cl_2 + H_2O \leftrightarrow HclO + HCl$$

verursacht. In neuerer Zeit wird auch vermehrt Chlordioxid (ClO$_2$) als Biozid verwendet, da es hervorragende algizide und bakterizide Wirkung besitzt und im Gegensatz zu NaOCl und Cl$_2$ nicht zur Bildung von Haloformen, die in manchen Ländern als gesundheitsgefährdend eingestuft werden, neigt. Näheres zu diesen Aspekten ist den Büchern "Kühlwasser", Hans-Dietrich Held, Vulkanverlag Dr. W. Klasen, Essen 1984, 3. Aufl., S. 193 ff; "Handbook of Chlorination and Alternative Desinfectants", G. Clifford White, Wiley Interscience, 4th edition, S. 1154; "Wasser", Karl Höll, Walter de Gruyter und Co., Berlin 1970, 5. Aufl., S. 411 und 75 entnehmbar.

Die Erfindung geht von der Beobachtung aus, daß die Biozidzugabe das Redox-Potential des Wassers erhöht, wodurch es zu einer erhöhten Korrosionsgefahr kommen kann.

Aufgabe der Erfindung ist demnach die Angabe eines Verfahrens zur Verringerung biologischer Verunreinigungen in einem wasserführenden System mit verschiedenen Anlageteilen, bei dem zusätzlich zu einer hinreichend hohen Vermeidung biologischer Verunreinigungen die Korrosionsgefahr in dem wasserführenden System verringert wird. Weitere Aufgabe der Erfindung ist die Angabe eines entsprechenden wasserführenden Systems.

Erfindungsgemäß wird die auf ein Verfahren gerichtete Aufgabe gelöst durch ein Verfahren zur Verringerung biologischer Verunreinigungen in einem verschiedene Anlagenteile aufweisenden, wasserführenden System, bei dem ein die biologischen Verunreinigungen verminderndes Biozid in das Wasser zugegeben wird, wobei mindestens eines der Anlagenteile ein korrosionskritisches Anlagenteil ist, und wobei die Biozidkonzentration im Wasser angepaßt an die Korrosionsanfälligkeit des korrosionskritischen Anlagenteils im Bereich dieses Anlagenteils eingestellt wird.

Mit der Erfindung wird somit der neue Weg eingeschlagen, die Biozidkonzentration lokal unterschiedlich in dem wasserführenden System einzustellen. Dabei wird die lokal unterschiedliche Biozidkonzentration im Wasser im Hinblick auf die verschiedenen Korrosionsanfälligkeiten der Anlagenteile in dem wasserführenden System angepaßt. Während somit korrosionsunkritische Anlagenteile des wasserführenden Systems mit einer so hohen Biozidkonzentration beaufschlagt werden, daß die Ausbildung biologischer Verunreinigungen hinreichend klein bleibt, wird im Bereich korrosionskritischer Anlagenteile die Biozidkonzentration verringert, um durch das damit gleichzeitig verringerte Redox-Potential eine verringerte Korrosion in dem korrosionskritischen Anlagenteil zu erreichen. Es hat sich gezeigt, daß trotzdem die Ausbildung biologischer Verunreinigungen auch in diesem Anlagenteil hinreichend klein gehalten werden können. Zudem können zusätzliche Reinigungssysteme speziell für ein solches korrosionskritisches Anlagenteil vorgesehen werden.

Bevorzugtermaßen wird die Biozidkonzentration durch Zugabe eines Abbaustoffes zum Wasser, durch den das Biozid abgebaut wird, eingestellt. Ein solcher Abbaustoff verringert somit durch Neutralisierung oder Zersetzung des Biozides die Biozidkonzentration im Wasser. Eine solche Abbaustoffzugabe ermöglicht in einfacher Weise die lokale Einstellung einer Biozidkonzentration.

Vorzugsweise wird so viel Abbaustoff zugegeben, daß das Redoxpotential des Wassers unterhalb eines für den korrosionskritischen Anlagenteil charakteristischen Wertes für ein Lochkorrosionspotential liegt. Gerade bei einer homogenen Materialwahl des korrosionskritischen Anlagenteils kann ein Lochkorrosionspotential für eben dieses Material angegeben werden, oberhalb dessen eine verstärkte Korrosion einsetzt. Durch die dosierte Zugabe des Abbaustoffs so, daß gerade so viel Biozid abgebaut oder neutralisiert wird, daß das Redox-potential des Wassers unterhalb des Lochkorrosionspotentials liegt, ist mit der weitgehenden Verminderung der Korrosionsgefährdung immer noch eine biozide Wirkung durch das verbleibende Biozid vorhanden. Durch den Abbaustoff wird also das Biozid nicht vollständig entfernt, sondern gerade so weit, daß die Korrosionsgefahr ausreichend gesenkt ist.

Bevorzugtermaßen wird als Abbaustoff ein Reduktionsmittel zugegeben. Mit diesem Reduktionsmittel wird die oxidierende Wirkung des Biozides neutralisiert. Geeignet ist dafür z.B. die Zugabe von Natriumhydrogensulfit.

Bevorzugtermaßen wird als Abbaustoff ein Oxidationsmittel zugegeben, weiter bevorzugt Wasserstoffperoxid. Dies ist ein ganz neuer Ansatz für den Abbaustoff, der auf den ersten Blick abwegig wirkt, da zu dem bereits als Oxidationsmittel wirkenden Biozid weiteres Oxidationsmittel hinzugegeben wird. Die ja gerade korrosionsgefährdende Wirkung der Anhebung des Redoxpotentials wird somit auf den ersten Blick sogar eher verstärkt. Die geeignete Wahl des Oxidationsmittels führt aber überraschenderweise zu einem drastischen Abbau des Biozides, so daß in Summe eine Reduzierung des Redoxpotentiales folgt. Gerade Wasserstoffperoxid ist schon in kleinsten Mengen geeignet, etwa die Chlordioxidkonzentration im Wasser drastisch zu mindern. Versuche haben gezeigt, daß z.B. die Zugabe von 10 ppm Wasserstoffperoxid das Redoxpotential von wäßrigen, Chlordioxid-haltigen Natriumchloridlösungen innerhalb weniger Sekunden um 200 bis 400 mV senkt. Mit der Zugabe von Wasserstoffperoxid ist somit eine sehr schnelle Regulierung des Redoxpotentials möglich. Darüber hinaus ist Wasserstoffperoxid in den notwendigen Konzentrationen physiologisch unbedenklich und stellt gleichzeitig ebenfalls ein Biozid dar.

Vorzugsweise wird die Biozidkonzentration im Wasser über Messung des Redoxpotentials des Wassers bestimmt. Hierdurch wird es möglich, die Zugabe des Abbaustoffs an eine tatsächlich aktuell vorliegende Biozidkonzentration anzupassen und dadurch sehr genau die Abbaustoffmenge auf den höchstens notwendigen Wert einzustellen. Vorzugsweise wird die Biozidkonzentration aus dem gemessenen Redoxpotential anhand einer Kalibrierkurve bestimmt. Eine solche Kalibrierkurve gibt das Redoxpotential für das jeweils verwendete Wasser in Abhängigkeit der Biozidkonzentration an. Die Eigenschaften des verwendeten Wassers sind zu berücksichtigen, da bei gleicher Biozidkonzentration ganz unterschiedliche Redoxpotentiale aufgrund übriger Wasserinhaltsstoffe in den verschiedenen Wässern auftreten können. Aus der Kalibrierkurve ist somit mit dem gemessenen Wert für das Redoxpotential der Wert für die Biozidkonzentration ablesbar.

Vorzugsweise erfolgt die Bestimmung der Biozidkonzentration in einer unmittelbar vor dem korrosionskritischen Anlagenteil liegenden Reaktionsstrecke des wasserführenden Systems. Weiter bevorzugt erfolgt die Zugabe des Abbaustoffs in der Reaktionsstrecke. Die Verminderung des Redoxpotentials durch die Zugabe des Abbaustoffs setzt somit in der unmittelbar vor dem korrosionskritischen Anlagenteil angeordneten Reaktionsstrecke ein. Dazu wird zunächst die Biozidkonzentration lokal am Anfang der Reaktionsstrecke gemessen und der Abbaustoff entsprechend der aus der Messung ableitbaren erforderlichen Menge zugegeben. Die Reaktion des Abbaustoffs mit dem Biozid erfolgt über einen gewissen Teil der Reaktionsstrecke hinweg. Tritt das so behandelte Wasser in den korrosionskritischen Anlagenteil ein, so ist das Redoxpotential bereits auf den für eine Korrosion unkritischen Wert gesenkt. Selbstverständlich kann nach Durchlaufen des korrosionskritischen Anlagenteils wiederum Biozid in das Wasser eingespeist werden, um die erforderliche Vermeidung biologischer Verunreinigungen für die nachfolgenden Anlagenteile aufrechtzuerhalten.

Bevorzugtermaßen ist das wasserführende System ein Kühlwasserkreislauf eines Dampfturbinenkraftwerks. Weiter bevorzugt ist das korrosionskritische Anlagenteil ein Kondensator für Dampf aus einer Dampfturbine. Gerade in einem ausgedehnten Kühlwasserkreislauf eines Kraftwerks liegen unterschiedlichste Anlagenteile mit unterschiedlicher Empfindlichkeit hinsichtlich ihrer Korrosion vor. Die lokal unterschiedliche Einstellung der Biozidkonzentration trägt der unterschiedlichen Anfälligkeit gegenüber biologischen Verunreinigungen und der unterschiedlichen Korrosionsanfälligkeit Rechnung. Ein Kondensator für Dampf aus einer Dampfturbine wird in zahlreichen Rohren von Kühlwasser durchflossen. Um diese ausgedehnte Verrohrung korrosionsfest zu gestalten, mußte in der Vergangenheit je nach Kühlwasserbeschaffenheit auf teuere, korrosionsfeste Materialien zurückgegriffen werden, da der gesamte Kühlwasserkreislauf einer hohen Biozidkonzentration unterworfen war. Durch die lokale Reduktion der Biozidkonzentration im Bereich des Kondensators ist es möglich, billigere Materialien für die Berohrung zu verwenden.

Erfindungsgemäß wird die auf ein wasserführendes System gerichtete Aufgabe gelöst durch ein wasserführendes System mit einem korrosionskritischen Anlagenteil und einer Biozidzugabe-Einrichtung für die Zugabe von biologische Verunreinigungen verringerndem Biozid zum Wasser, wobei eine Abbaustoffzugabe-Einrichtung für eine Zugabe eines Abbaustoffes zum Wasser in einer vor dem korrosionskritischen Anlagenteil liegenden Reaktionsstrecke vorgesehen ist und wobei eine Zugabe des Abbaustoffes die Biozidkonzentration im Wasser senkt.

Die Vorteile für ein solches wasserführendes System ergeben sich entsprechend den obigen Ausführungen zu den Vorteilen des Verfahrens zur Verringerung biologischer Verunreinigungen in einem wasserführenden System.

Vorzugsweise ist eine Meßeinrichtung zur Messung des Redoxpotentiales des Wassers in der Reaktionsstrecke vorgesehen.

Bevorzugtermaßen ist die Abbaustoff-Zugabeeinrichtung mit einem Oxidationsmittel-Reservoir, insbesondere mit einem Wasserstoffperoxid-Reservoir, verbunden.

Das wasserführende System ist bevorzugt als Kühlwasserkreislauf eines Dampfturbinenkraftwerks ausgebildet. Weiter bevorzugt ist das korrosionskritische Anlagenteil dabei ein Kondensator für Dampf einer Dampfturbine.

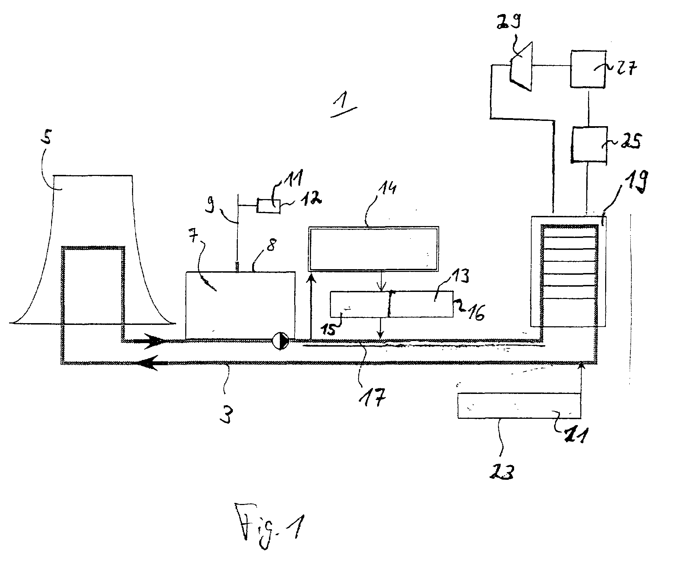

Die Erfindung wird beispielhaft anhand der Zeichnung näher erläutert. Die einzige Figur zeigt schematisch und nicht maßstäblich ein Dampfturbinenkraftwerk 1. Ein Kühlwasserkreislauf 3 ist als ein wasserführendes System Teil des Dampfturbinenkraftwerks 1. In einem Kühlturm 5 wird Kühlwasser 7 des Kühlwasserkreislaufs 3 gekühlt. Das Kühlwasser 7 ist in einem Kühlwassersammelbehälter 8 als Ausgleichsbehälter gespeichert. Dem Kühlmittelsammelbehälter 8 wird das Kühlwasser 7 als Rohwasser über die Zuleitung 9 zugeführt. Ein Biozid 11 wird über eine Biozid-Zugabeeinrichtung 12 dem Kühlwasser 7 in der Zuleitung 9 zugesetzt. Durch dieses Biozid 11 werden biologische Verunreinigungen, wie Algen, Bakterien oder sonstige Ablagerungen bildende Bestandteile, abgebaut. Als Biozid 11 wird in der Regel Chlor oder Chlordioxid verwendet. Eine Meßeinrichtung 14 dient der Messung des Redoxpotentials des Kühlwassers 7. Aus dem Redoxpotential kann z.B. über eine geeignete Kalibrierkurve die Biozidkonzentration im Kühlwasser 7 bestimmt werden. Abhängig von dieser Biozidkonzentration wird aus einem Oxidationsmittelreservoir 16 ein Abbaustoff 13 - hier Wasserstoffperoxid - mittels einer Abbaustoff-Zugabeeinrichtung 15 dem Kühlwasser 7 zugesetzt. Die Messung der Biozidkonzentration mittels der Meßeinrichtung 14 und auch die Zugabe des Abbaustoffs 13 erfolgen in einer Reaktionsstrecke 17 des Kühlkreislaufs 3. Diese Reaktionsstrecke 17 ist einem ein korrosionskritisches Anlagenteil darstellenden Kondensator 19 vorgeschaltet. In der Reaktionsstrecke 17 erfolgt mittels des Abbaustoffs 13 ein Abbau oder eine Neutralisierung des Biozides 11. Vor Eintritt des Kühlwassers 7 in den Kondensator 19 ist somit die Biozidkonzentration so weit gesenkt, daß durch das damit nur noch vorliegende Redoxpotential des Kühlwassers 7 keine nennenswerte Korrosionsgefährdung für den Kondensator 19 vorliegt. Nach Durchlaufen des Kondensators 19 wird dem Kühlwasser 7 über eine weitere Biozid-Zuführungseinrichtung 23 erneut Biozid 11 zugesetzt, um die dem Kondensator 19 folgenden Leitungen des Kühlwasserkreislaufs 3 vor biologischen Verunreinigungen zu schützen.

Der Kondensator 19 dient zur Kondensierung von Dampf einer Dampfturbine 29. Dem Kondensator 19 wird kondensiertes Wasser entnommen und einem Speisewasserbehälter 25 zugeführt. Vom Speisewasserbehälter 25 gelangt das Speisewasser zu einem Dampferzeuger 27. Der dort erzeugte Dampf wird der Dampfturbine 29 zugeleitet. Der weitgehend entspannte Dampf aus der Dampfturbine 29 wird dem Kondensator 19 zugeführt, wo er über die Kühlwirkung des Kühlkreislaufs 3 zu Wasser kondensiert. Der Kondensator 19 weist hierzu eine sehr aufwendige Berohrung für das Kühlwasser 7 auf. Um diese Berohrung korrosionsfest auszuführen, müssen je nach Beschaffenheit des Kühlwassers 7 und der damit notwendigen Zusetzung von Biozid 11 teuere, korrosionsfeste Materialien verwendet werden. Durch die lokale Absenkung der Biozidkonzentration im Kühlwasser 7 durch die Zugabe des Abbaustoffs 13 wird das Redoxpotential des Kühlwassers 7 so weit gesenkt, daß es unter einer Lochkorrosionsschwelle für die Berohrung des Kondensators 19 liegt. Damit ist die Korrosionsfestigkeit auch bei einer Verwendung billigerer Materialien für die Berohrung gewährleistet. Gleichzeitig wird aber die biozide Wirkung im übrigen Kühlwasserkreislauf 3 nicht beeinträchtigt. Als Abbaustoff 13 wird vorzugsweise Wasserstoffperoxid eingesetzt. Überraschenderweise genügen bereits geringste Mengen von Wasserstoffperoxid, um gerade bei einer Chlordioxid-Zusetzung als Biozid die Biozidkonzentration schnell und effektiv zu senken. Dies ist um so überraschender, als Wasserstoffperoxid ebenfalls ein Biozid mit oxidierender Wirkung darstellt. Durch den überproportional starken Abbau des Biozides durch das Wasserstoffperoxid wird aber trotzdem das Redoxpotential im Kühlwasser 7 gesenkt.

**Patentansprüche**

1. Verfahren zur Verringerung biologischer Verunreinigungen in einem verschiedene Anlagenteile (5,19) aufweisenden, wasserführenden System (3), bei dem ein die biologischen Verunreinigungen verminderndes Biozid (11) in das Wasser (7) zugegeben wird,
**dadurch gekennzeichnet**, daß mindestens eines der Anlagenteile (5,19) ein korrosionskritisches Anlagenteil (19) ist, wobei die Biozidkonzentration im Wasser (7) angepaßt an die Korrosionsanfälligkeit des korrosionskritischen Anlagenteiles (19) im Bereich dieses Anlagenteiles (19) eingestellt wird.

2. Verfahren nach Anspruch 1,
**dadurch gekennzeichnet**, daß die Biozidkonzentration durch Zugabe eines Abbaustoffes (13) zum Wasser (7), durch den das Biozid (11) abgebaut wird, eingestellt wird.

3. Verfahren nach Anspruch 2,
**dadurch gekennzeichnet**, daß so viel Abbaustoff (13) zugegeben wird, daß das Redoxpotential des Wassers (7) unterhalb eines für den korrosionskritischen Anlagenteil (19) charakteristischen Wertes für ein Lochkorrosionspotential liegt.

4. Verfahren nach Anspruch 2 oder 3,
**dadurch gekennzeichnet**, daß als Abbaustoff (13) ein Reduktionsmittel zugegeben wird.

5. Verfahren nach Anspruch 2 oder 3,
**dadurch gekennzeichnet**, daß als Abbaustoff (13) ein Oxidationsmittel zugegeben wird.

6.  Verfahren nach Anspruch 5,
    **dadurch gekennzeichnet**, daß als Abbaustoff (13) Wasserstoffperoxid zugegeben wird.

7.  Verfahren nach einem der vorhergehenden Ansprüche,
    **dadurch gekennzeichnet**, daß die Biozidkonzentration im Wasser (7) über Messung des Redoxpotentiales des Wassers (7) bestimmt wird.

8.  Verfahren nach Anspruch 7,
    **dadurch gekennzeichnet**, daß die Biozidkonzentration im Wasser (7) aus dem gemessenen Redoxpotential anhand von einer Kalibrierkurve bestimmt wird.

9.  Verfahren nach Anspruch 7 oder 8,
    **dadurch gekennzeichnet**, daß die Bestimmung der Biozidkonzentration in einer unmittelbar vor dem korrosionskritischen Anlagenteil (19) liegenden Reaktionsstrecke (17) des wasserführenden Systems (3) erfolgt.

10. Verfahren nach Anspruch 2 und 9,
    **dadurch gekennzeichnet**, daß die Zugabe des Abbaustoffes (13) in der Reaktionsstrecke (17) erfolgt.

11. Verfahren nach einem der vorhergehenden Ansprüche,
    **dadurch gekennzeichnet**, daß das wasserführende System (3) ein Kühlwasser-Kreislauf eines Dampfturbinen-Kraftwerkes (1) ist.

12. Verfahren nach Anspruch 9,
    **dadurch gekennzeichnet**, daß das korrosionskritische Anlagenteil (19) ein Kondensator für Dampf aus einer Dampfturbine (29) ist.

13. Wasserführendes System (3) mit einem korrosionskritischen Anlagenteil (19) und einer Biozidzugabeeinrichtung (12) für die Zugabe von biologische Verunreinigungen verringerndem Biozid (11) zum Wasser (7),
    **dadurch gekennzeichnet**, daß eine Abbaustoffzugabeeinrichtung (15) für eine Zugabe eines Abbaustoffes zum Wasser (7) in einer vor dem korrosionskritischen Anlagenteil (19) liegenden Reaktionsstrecke (17) vorgesehen ist, wobei eine Zugabe des Abbaustoffes (13) die Biozidkonzentration im Wasser (7) senkt.

14. Wasserführendes System (3) nach Anspruch 13,
    **dadurch gekennzeichnet**, daß eine Meßeinrichtung (14) zur Messung des Redoxpotentiales des Wassers (7) in der Reaktionsstrecke (17) vorgesehen ist.

15. Wasserführendes System (3) nach Anspruch 13 oder 14,
    **dadurch gekennzeichnet**, daß die Abbaustoffzugabeeinrichtung (15) mit einem Oxidationsmittelreservoir (16), insbesondere mit einem Wasserstoffperoxidreservoir (16), verbunden ist.

16. Wasserführendes System (3) nach einem der Ansprüche 13 bis 15, **gekennzeichnet durch** eine Ausführung als Kühlwasser-Kreislauf eines Dampfturbinen-Kraftwerkes (1).

17. Wasserführendes System (3) nach Anspruch 16,
    **dadurch gekennzeichnet**, daß das korrosionskritische Anlagenteil (19) ein Kondensator für Dampf einer Dampfturbine (29) ist.

Fig. 1

**Europäisches Patentamt**

## EUROPÄISCHER RECHERCHENBERICHT

Nummer der Anmeldung

EP 00 10 4101

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 252 300 A (HINCHLIFFE CLEMENT) 12. Oktober 1993 (1993-10-12) * Zusammenfassung * * Spalte 1, Zeile 9-11 * * Spalte 2 * * Spalte 3, Zeile 17-20,49-51 * * Spalte 4, Zeile 38-42 * | 1,7-9,12 | C02F1/50 C02F1/72 C02F1/70 |
| X | US 5 236 673 A (COAKLEY TIMOTHY G ET AL) 17. August 1993 (1993-08-17) * Zusammenfassung; Ansprüche * | 1,7,9,12 | |
| A | GB 2 289 672 A (DEVERON ENVIRONMENTAL LTD) 29. November 1995 (1995-11-29) * Zusammenfassung; Ansprüche 1-4 * * Seite 24, Zeile 23,26 * | 2,5,6,9 | |
| A | WO 93 04986 A (NOVAPHARM RES AUSTRALIA) 18. März 1993 (1993-03-18) * Zusammenfassung; Ansprüche * * Seite 18, Zeile 14 – Seite 19, Zeile 17 * | 2,5,6,9 | |
| A | EP 0 590 184 A (BOGIE KENNETH DAVID ;ELK RODNEY STEPHEN (ZA)) 6. April 1994 (1994-04-06) * Zusammenfassung; Ansprüche 1,6 * | 2,5,6,9 | |

**RECHERCHIERTE SACHGEBIETE (Int.Cl.7)**

C02F

Der vorliegende Recherchenbericht wurde für alle Patentansprüche erstellt

| Recherchenort | Abschlußdatum der Recherche | Prüfer |
|---|---|---|
| DEN HAAG | 26. Juli 2000 | Serra, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 00 10 4101

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-07-2000

| Im Recherchenbericht angeführtes Patentdokument | | Datum der Veröffentlichung | Mitglied(er) der Patentfamilie | | Datum der Veröffentlichung |
|---|---|---|---|---|---|
| US 5252300 | A | 12-10-1993 | AU | 627948 B | 03-09-1992 |
| | | | AU | 6571990 A | 09-05-1991 |
| | | | CA | 2068295 A | 09-11-1993 |
| US 5236673 | A | 17-08-1993 | WO | 9425150 A | 10-11-1994 |
| | | | AU | 4221693 A | 21-11-1994 |
| | | | US | 5332556 A | 26-07-1994 |
| GB 2289672 | A | 29-11-1995 | KEINE | | |
| WO 9304986 | A | 18-03-1993 | KEINE | | |
| EP 0590184 | A | 06-04-1994 | KEINE | | |

EPO FORM P0461

Für nähere Einzelheiten zu diesem Anhang : siehe Amtsblatt des Europäischen Patentamts, Nr.12/82